# EUROPÄISCHE PATENTSCHRIFT

(11) **EP 3 219 476 B1**
(45) Veröffentlichungstag und Bekanntmachung des Hinweises auf die Patenterteilung: **30.06.2021**
(21) Anmeldenummer: 16160913.6
(22) Anmeldetag: 17.03.2016
(51) Int. Cl.: B29C 73/06, B29C 73/02, B29C 73/10, B29C 73/26

(54) **VERFAHREN ZUR REPARATUR EINES SANDWICHBAUELEMENTS**
METHOD FOR REPAIRING A SANDWICH CONSTRUCTION ELEMENT
PROCEDE DESTINE A LA REPARATION D'UN PANNEAU-SANDWICH

(43) Veröffentlichungstag der Anmeldung: 20.09.2017
(73) Patentinhaber: Airbus Operations GmbH, 21129 Hamburg (DE)
(72) Erfinder: Karrasch, Tobias, 21129 Hamburg (DE); Kleinpeter, Roman, 21129 Hamburg (DE); Sayeh, Mohamed-Mourad, 21129 Hamburg (DE)

(56) Entgegenhaltungen:
- EP-A1- 1 859 922
- EP-A1- 1 859 923
- EP-A1- 1 870 228
- EP-A2- 1 972 429
- US-A1- 2014 295 123
- US-B1- 6 385 836

## Beschreibung

### TECHNISCHES GEBIET

Die Erfindung betrifft ein Verfahren zur Reparatur eines Sandwichbauelements.

### HINTERGRUND DER ERFINDUNG

Sandwichbauelemente sind aus dem Stand der Technik bekannt. Zur Herstellung eines Sandwichbauelements werden verschiedene Werkstoffe mit unterschiedlichen Eigenschaften in Schichten zu dem Sandwichbauelement zusammengefügt. Sandwichbauelemente werden vorzugsweise im Leichtbau eingesetzt. Ein Sandwichelement weist eine erste Deckschicht und eine zweite Deckschicht auf, wobei zwischen den beiden Deckschichten ein zumeist leichter Kern, also ein Kernwerkstoffelement, angeordnet ist, der dazu ausgebildet ist, dass die beiden Deckschichten voneinander beabstandet gehalten sind. Die Deckschichten dienen meist zur Kraftaufnahme. Der Kern kann beispielsweise aus einem Schaumstoff, insbesondere Hartschaum, einer Wolle, insbesondere Mineralwolle, und/oder anderen geeigneten Stoffen bestehen oder diese aufweisen. Für eine besonders leichte Bauweise können die erste Deckschicht und die zweite Deckschicht jeweils als Kunststoffdeckschicht ausgebildet sein. Sandwichbauelemente werden beispielsweise für Flugzeugteile, insbesondere für einen Flugzeugrumpf und/oder für Flügelschalen, verwendet. Sandwichbauelemente werden aber auch für Sportboote, Eisenbahnen, insbesondere Eisenbahnwaggons, Surfbretter und/oder für Windenergieanlagen, insbesondere für Rotorblätter, verwendet.

Wird ein Sandwichbauelement beschädigt, so bedarf es oftmals einer Reparatur des Sandwichbauelements, da ein vollständiger Ersatz des Sandwichbauelements oftmals nicht möglich ist oder mit sehr hohen Kosten verbunden ist. Beschädigungen des Sandwichbauelements können zum Beispiel durch Anfahrbeschädigungen mit einem feststehenden Element oder durch eine Kollision mit einem Fahrzeug hervorgerufen werden. Beschädigungen können beispielsweise Dellen, Verformungen, Schnitte oder Brüche sein. Durch eine Beschädigung des Sandwichbauelements wird oftmals zumindest eine der Deckschichten beschädigt. Darüber hinaus kann es vorkommen, dass auch der Kern mitbeschädigt ist. Durch die Beschädigung eines Sandwichbauelements werden die zugehörigen Werkstoffeigenschaften beeinträchtigt. Eine Reparatur eines derartig beschädigten Sandwichbauelements ist deshalb zumeist notwendig, um das Sandwichbauelement für den vorgesehenen Einsatz weiterverwenden zu können.

Eine Reparatur eines Sandwichbauelements erfolgt in der Praxis oftmals derart, dass im Bereich der Beschädigung einander gegenüberliegende Teile der ersten und zweiten Deckschicht entfernt werden, um daraufhin den Bereich des Kerns zwischen den beiden entfernten Teilen der Deckschichten durch einen Reparatur-Kern zu ersetzen. Ist der Kern wiederhergestellt, erfolgt die anschließende Wiederherstellung der beiden Deckschichten.

So beschreibt EP 1 972 429 A2, das den Oberbegriff des Anspruchs 1 offenbart, dass zur Reparatur einer Sandwichstruktur mit einem Honigwabenkern ein Teil einer einzelnen Deckschicht entfernt werden kann. Daraufhin kann ein Teil des Honigwabenkerns mit Hilfe von durch die zweite Deckschicht durchgeführten Stäben ersetzt werden und die Deckschicht wird Fasern und einer Abdeckplatte verschlossen.

Bei der Reparatur eines Sandwichbauelements nach der zuvor erläuterten Art wurde jedoch festgestellt, dass die Zugänglichkeit des Sandwichbauelements eingeschränkt sein kann. Zwar ist oftmals eine der beiden Deckschichten problemlos zu erreichen, jedoch gilt dies nicht immer für die zweite Deckschicht. Bei einer Verwendung des Sandwichbauelements für ein Fahrzeug, insbesondere ein Flugzeug oder ein Straßenfahrzeug, wie beispielsweise ein Personenkraftwagen, ein Lastkraftwagen oder ein Anhänger, kann eine äußere Deckschicht des Sandwichbauelements beispielsweise gut erreichbar sein, wohingegen die zweite Deckschicht innen liegend angeordnet sein kann und damit schlecht erreichbar ist. Denn die innen liegende Deckschicht ist oftmals von anderen Bauteilen des Fahrzeugs, wie beispielsweise einer Isolierung oder innen angeordneten Verkleidungselementen, verdeckt. In diesem Fall ist der Zugang zu der zweiten Deckschicht nur unter erhöhtem Aufwand möglich. Entsprechend aufwendig gestaltet sich die Reparatur eines Sandwichbauelements, was zu einem hohen Zeitbedarf für die Reparatur und zu entsprechenden Kosten führt.

### ZUSAMMENFASSUNG DER ERFINDUNG

Es ist somit eine Aufgabe der Erfindung, ein Verfahren zur Reparatur eines Sandwichbauelements bereitzustellen, mit dem das Sandwichbauelement besonders zeitsparend und/oder besonders kostengünstig reparierbar ist.

Die Aufgabe wird gelöst durch ein Verfahren zur Reparatur eines Sandwichbauelements mit den Merkmalen des unabhängigen Anspruchs 1. Vorteilhafte Weiterbildungen und bevorzugte Ausführungsformen sind in den Unteransprüchen und in der nachfolgenden Beschreibung zu entnehmen.

Es wird ein Verfahren zur Reparatur eines Sandwichbauelements vorgeschlagen. Das Sandwichbauelement weist eine erste, faserverstärkte Kunststoffdeckschicht, eine zweite Kunststoffdeckschicht und einen Kern auf, der zwischen der ersten und der zweiten Kunststoffdeckschicht angeordnet ist. Der Kern weist Poren auf. Das Verfahren weist die folgenden Schritte auf:
a) Entfernen eines Teils der ersten Kunststoffdeckschicht zur Bildung einer Reparaturöffnung, die einen Zugang zu einem Reparaturbereich des Kerns bildet,
b) Ersetzen zumindest eines Teils des Kerns aus dem Reparaturbereich durch einen Reparatur-Kern,
c) Einlegen von Fasern, insbesondere von einem Prepreg-Material mit den Fasern, in die Reparaturöffnung,
d) Auflegen eines Abdeckelements, vorzugsweise einer Abdeckplatte, auf die erste Kunststoffdeckschicht, so dass sich das Abdeckelement vollständig über die Reparaturöffnung erstreckt und eine ringförmige Dichtfläche um die Reparaturöffnung zwischen dem Abdeckelement und der ersten Kunststoffdeckschicht entsteht, wobei das Abdeckelement einen ersten Kanal aufweist, der sich von einer oberseitigen Kanalöffnung zu einer unterseitigen Kanalöffnung erstreckt, die zu der Reparaturöffnung gegenüberliegend angeordnet ist,
e) Einstechen einer Hohlnadel durch das Abdeckelement und die Fasern in den Reparatur-Kern, so dass eine Spitze der Hohlnadel bis in einen von der Reparaturöffnung abgewandten Endabschnitt des Reparatur-Kerns ragt,
f) Herstellen einer Fluidverbindung zwischen einem Behälter mit einem flüssigen Harz und einem von der Spitze abgewandten Ende der Hohlnadel,
g) Absaugen von Fluid, insbesondere Luft, durch den ersten Kanal aus dem Reparaturbereich, so dass flüssiges Harz durch die Hohlnadel in den Endabschnitt des Reparatur-Kerns einströmt und zu den Fasern in der Reparaturöffnung fließt,
h) Beenden des Absaugens aus Schritt g) wenn das flüssige Harz zu den Fasern geströmt ist,
i) Herausziehen der Hohlnadel aus dem Sandwichbauelement und dem Abdeckelement, und
j) Aushärten des flüssigen Harzes in dem Sandwichbauelement, so dass die Reparaturöffnung von ausgehärtetem Harz mit integrierten Fasern verschlossen wird, welche sodann einen faserverstärkten Kunststoffverschluss für die erste Kunststoffdeckschicht bilden.

Mit dem vorgeschlagenen Verfahren kann ein Sandwichbauelement von einem zu der ersten Kunststoffdeckschicht außenliegenden Arbeitsbereich repariert werden. Ein Eingriff in die zweite Kunststoffdeckschicht ist nicht notwendig. Vielmehr kann die Reparatur ausschließlich von dem genannten Arbeitsbereich aus ausgeführt werden. Wird das Sandwichbauelement beispielsweise für einen Rumpf eines Flugzeugs verwendet, wobei das Sandwichbauelement eine außenseitige Beschädigung aufweist, die auch zu einer Beschädigung des Kerns geführt hat, so bietet das Verfahren die Möglichkeit, dass der Flugzeugrumpf von außen her reparierbar ist, ohne einen Zugang aus dem Innenraum des Flugzeugs zu der Innenseite des Sandwichbauelements, an dem die zweite Kunststoffdeckschicht angeordnet ist, schaffen zu müssen. Indem der genannte Zugang nicht geschaffen werden muss, sind dafür auch keine weiteren Bauteile an der Innenseite zu dem Sandwichbauelement innerhalb des Flugzeugrumpfs zu entfernen. Die Reparatur des Flugzeugrumpfs bzw. des Sandwichbauelements kann somit besonders zeitsparend und kosteneffektiv ausgeführt werden.

In einem ersten Schritt wird ein Teil der ersten Kunststoffdeckschicht zur Bildung einer Reparaturöffnung entfernt. Das Entfernen kann mechanisch, beispielsweise durch ein Herausfräsen oder Abschleifen des ersten Teils der Kunststoffdeckschicht, erfolgen. Beispielsweise kann eine umlaufende Nut in die erste Kunststoffdeckschicht gefräst werden, so dass der erste Teil der ersten Kunststoffdeckschicht von der restlichen Kunststoffdeckschicht abgetrennt werden kann. Mit dem Entfernen bildet sich eine Reparaturöffnung aus, die einen Zugang zu dem Reparaturbereich des Kerns bildet. Der Reparaturbereich des Kerns ist also der Bereich des Kerns, der durch die Reparaturöffnung in der ersten Kunststoffdeckschicht zugänglich ist.

Daraufhin erfolgt in einem weiteren Verfahrensschritt das Ersetzen zumindest eines Teils des Kerns aus dem Reparaturbereich durch einen Reparatur-Kern. Der genannte Teil des Kerns umfasst die Beschädigung des Kerns. Der Reparatur-Kern ist vorzugsweise nach einer Art ausgebildet, wie sie für den Kern zur Herstellung des Sandwichbauelements ursprünglich verwendet wurde. Der Reparatur-Kern kann jedoch auch nach einer anderen Art ausgebildet sein, um den Kern geeignet zu reparieren. Bevorzugt weist der Reparatur-Kern ebenfalls Poren auf. Wurde zur ursprünglichen Herstellung des Sandwichbauelements beispielsweise ein Hartschaum als Kern verwendet, so kann der Reparatur-Kern ebenfalls als Hartschaum ausgebildet sein. Zum Ersetzen des Teils des Kerns kann dieser aus dem Reparaturbereich herausgeschnitten werden und entfernt werden. In den sich damit ergebenden Raum wird der Reparatur-Kern eingesetzt. Der Reparatur-Kern weist vorzugsweise eine äußere Form auf, die dem Teil des Kerns entspricht, der aus dem Reparaturbereich des Kerns entfernt wurde. Damit kann der Reparatur-Kern formschlüssig eingesetzt werden. Durch das Ersetzen des Teils des Kerns aus dem Reparaturbereich durch den Reparatur-Kern kann die äußere Form des Kerns also wiederhergestellt werden.

Anschließend werden Fasern in die Reparaturöffnung der ersten Kunststoffdeckschicht eingelegt. Die erste Kunststoffdeckschicht ist als eine faserverstärkte Kunststoffdeckschicht ausgebildet. Um die Reparaturöffnung in analoger Weise wiederherzustellen, werden die genannten Fasern in die Reparaturöffnung eingelegt. Die Fasern können von einem Prepreg-Material mit Fasern gebildet sein. Die Fasern erstrecken sich vorzugsweise über den gesamten Bereich der Reparaturöffnung. Die Fasern können als ein Faserverbund ausgebildet sein. Dazu können die Fasern zufällig verteilt angeordnet sein. Dies gilt insbesondere für das Prepreg-Material. Dabei kann das Prepreg-Material außerdem ein Matrixmaterial, insbesondere ein Harz, aufweisen, das die Fasern fixiert. Das Prepreg-Material kann Poren, insbesondere offene Poren, aufweisen. Mit dem Einlegen der Fasern wird das Ziel verfolgt, dass die Reparaturöffnung nach Abschluss des Reparaturverfahrens durch einen faserverstärkten Kunststoffverschluss verschlossen ist, der nach Art der ersten, faserverstärkten Kunststoffdeckschicht ausgebildet ist.

Nachdem die Fasern in die Reparaturöffnung eingelegt sind, erfolgt ein Auflegen eines Abdeckelements auf die erste Kunststoffdeckschicht, so dass sich das Abdeckelement vollständig über die Reparaturöffnung erstreckt und eine ringförmige Dichtfläche und/oder Dichtung um die Reparaturöffnung zwischen dem Abdeckelement und der ersten Kunststoffdeckschicht entsteht. Das Abdeckelement ist vorzugsweise nach Art einer Platte, insbesondere einer Abdeckplatte, ausgebildet. Es ist jedoch auch möglich, dass das Abdeckelement nach Art eines Zelts ausgebildet ist. Vorzugsweise wird ein umlaufender, außenseitiger Endabschnitt des Abdeckelements derart mit der ersten Kunststoffdeckschicht in Kontakt gebracht, dass sich die ringförmige bzw. umlaufende Dichtfläche bzw. Dichtung um die Reparaturöffnung erstreckt. Der Teil des Abdeckelements, der radial innenseitig zu dem umlaufenden, außenseitigen Endabschnitt des Abdeckelements ausgebildet ist, ist sodann oberhalb der ersten Kunststoffdeckschicht bzw. der Reparaturöffnung, in die die Fasern eingelegt sind, angeordnet. Zwischen dem Abdeckelement und der ersten Kunststoffdeckschicht bzw. dem Kern entsteht also ein abgedichteter Raum. Das Abdeckelement weist einen ersten Kanal auf, der sich von einer oberseitigen Kanalöffnung zu einer unterseitigen Kanalöffnung erstreckt, die zu der Reparaturöffnung gegenüberliegend angeordnet ist. Durch den ersten Kanal kann also eine Fluidverbindung zu dem zuvor genannten Raum geschaffen werden. Der erste Kanal dient später zum Absaugen eines Fluids aus dem genannten Raum und somit aus dem Reparaturbereich des Kerns. Dabei hat es sich als vorteilhaft erwiesen, wenn die Abdeckplatte nach Art einer Druckplatte ausgebildet ist. Die Abdeckplatte bzw. die Druckplatte können dazu formstabil ausgebildet sein. So kann die Abdeckplatte beispielsweise durch eine formstabile Kunststoffplatte gebildet sein. Außerdem hat es sich als vorteilhaft erwiesen, wenn die Abdeckplatte gewölbt ausgebildet ist, so dass eine der ersten Kunststoffdeckschicht zugewandte Seite der Abdeckplatte konkav ausgestaltet ist. Außerdem hat es sich als vorteilhaft erwiesen, wenn das Abdeckelement nach Art eines Zelts ausgebildet ist, wobei ein zugehöriges Zeltdach von der Reparaturöffnung beabstandet ist. Ist das Abdeckelement nach Art eines Zelts ausgebildet, so kann das Abdeckelement eine Zeltwandung aufweisen, die durch Streben derart aufgespannt ist, dass das Zelt eine gewölbte Form aufweist. Ein umlaufender Fußabschnitt des Zelts kann umlaufend oder ringförmig um die Reparaturöffnung herum mit der ersten Kunststoffdeckschicht verbunden werden, um die ringförmige bzw. umlaufende Dichtfläche bzw. Dichtung zu bilden. Die Zeltwandung kann als eine Kunststoff-Zeltwandung, eine Polyamid-Zeltwandung und/oder durch ein anderes verformbares Material zumindest mitgebildet sein. Für das Polyamid kann beispielsweise Polyamid 6 und/oder Polyamid 6.6 vorgesehen sein.

In einem weiteren Verfahrensschritt erfolgt das Einstechen einer Hohlnadel durch das Abdeckelement und die Fasern in dem Reparatur-Kern, so dass eine Spitze der Hohlnadel bis in einen von der Reparaturöffnung abgewandten Endabschnitt des Reparatur-Kerns ragt. Die Hohlnadel ist zum Leiten eines Fluids, insbesondere einer Flüssigkeit, ausgebildet. Vorzugsweise ist die Hohlnadel als Metall-Hohlnadel oder als Kunststoff-Hohlnadel ausgebildet. Mit ihrer Spitze voran wird die Hohlnadel durch das Abdeckelement und daraufhin durch die Fasern gestochen, bis die Spitze der Hohlnadel in den Reparatur-Kern eindringt. Der Reparatur-Kern erstreckt sich von einer der Reparaturöffnung zugewandten Seite zu einer von der Reparaturöffnung abgewandten Seite, die vorzugsweise der zweiten Kunststoffdeckschicht zugewandt ist. Die Hohlnadel wird mit ihrer Spitze derart weit in den Reparatur-Kern eingestochen, bis die Spitze in einem von der Reparaturöffnung abgewandten Endabschnitt des Reparatur-Kerns gelangt ist. Der von der Reparaturöffnung abgewandte Endabschnitt grenzt bevorzugt an die Seite des Reparatur-Kerns, der von der Reparaturöffnung abgewandt ist und/oder der zweiten Kunststoffdeckschicht zugewandt ist. Wird die erste Kunststoffdeckschicht als eine obere Deckschicht angesehen und die zweite Kunststoffdeckschicht als eine untere Deckschicht angesehen, so kann die Spitze der Hohlnadel bis in einen unteren Endabschnitt des Reparatur-Kerns gestochen werden. Die Hohlnadel ist an der Spitze geöffnet, so dass ein Fluid, das die Hohlnadel in Richtung der Spitze durchströmt, an der Spitze austreten kann und sodann in den genannten Endabschnitt des Reparatur-Kerns gelangt.

In einem weiteren Verfahrensschritt wird eine Fluidverbindung zwischen einem Behälter mit einem flüssigen Harz und einem von der Spitze abgewandten Ende der Hohlnadel hergestellt. Die Hohlnadel bildet zwischen dem genannten Ende der Hohlnadel und der Spitze eine Fluidleitung aus. Indem das von der Spitze abgewandte Ende der Hohlnadel in Fluidverbindung mit dem Behälter bzw. mit dem darin befindlichen flüssigen Harz ist, kann das flüssige Harz aus dem Behälter durch die Hohlnadel zu dem von der Reparaturöffnung abgewandten Endabschnitt des Reparatur-Kerns strömen.

In einem weiteren Verfahrensschritt wird Fluid, insbesondere Luft, durch den ersten Kanal aus dem Reparaturbereich abgesaugt, so dass flüssiges Harz durch die Hohlnadel in den Endabschnitt des Reparatur-Kerns einströmt und zu den Fasern in der Reparaturöffnung fließt. In diesem Zusammenhang wird nochmals darauf hingewiesen, dass zwischen dem Abdeckelement und der ersten Kunststoffdeckschicht eine Dichtung besteht, so dass durch das Absaugen des Fluids, insbesondere der Luft, durch den ersten Kanal flüssiges Harz aus dem Behälter durch die Fluidverbindung, die Hohlnadel und sodann durch den Reparaturbereich bis zu dem ersten Kanal angesaugt werden kann. Dabei strömt das flüssige Harz zunächst in den Reparatur-Kern. Von dort aus strömt das flüssige Harz aufgrund des Absaugens weiter zu der Reparaturöffnung, in der die Fasern eingelegt sind. Mit dem Absaugen des Fluids erreicht das flüssige Harz also auch die Fasern.

Außerdem hat es sich als vorteilhaft erwiesen, wenn der Kern und/oder der Reparatur-Kern von einem Hartschaum gebildet ist. Alternativ kann der Kern von einem Weichschaum gebildet sein. Die Poren des Kerns können offenporig sein. In diesem Fall kann das flüssige Harz durch die Poren des Reparatur-Kerns in Richtung der Fasern in der Reparaturöffnung fließen. Alternativ und/oder ergänzend kann das flüssige Harz an einer und/oder durch eine Grenzschicht zwischen dem Reparatur-Kern und dem übrigen Kern in Richtung der Fasern in der Reparaturöffnung fließen. Vorzugsweise ist der übrige Kern des Sandwichbauelements durch ausgehärtetes Harz zumindest im Wesentlichen abgeschlossen, so dass das einströmende, flüssige Harz nicht zu dem übrigen Kern bzw. darein strömt. Weiterhin kann es bevorzugt sein, dass die Poren des Kerns und/oder des Reparatur-Kerns geschlossen sind. In diesem Fall werden der Reparatur-Kern bzw. die Grenzschicht zu dem übrigen Kern mit dem flüssigen Harz benetzt.

Das Absaugen des Fluids wird beendet, wenn das flüssige Harz zu den Fasern geströmt ist. Das Absaugen des Fluids kann dabei unmittelbar dann beendet werden, wenn das flüssige Harz die Fasern vollständig benetzt und/oder bedeckt hat. Weiterhin kann es vorgesehen sein, dass noch eine weitere Menge an Fluid abgesaugt wird, so dass sichergestellt ist, dass nicht versehentlich in dem flüssigen Harz eingeschlossene Luftblasen in dem zu reparierenden Sandwichbauelement sind.

Daraufhin erfolgt ein Herausziehen der Hohlnadel aus dem Sandwichbauelement und dem Abdeckelement. Dabei verbleibt das eingeströmte, flüssige Harz in dem zu reparierenden Sandwichbauelement.

In einem weiteren Verfahrensschritt erfolgt sodann ein Aushärten des flüssigen Harzes in dem Sandwichbauelement, so dass die Reparaturöffnung von ausgehärtetem Harz mit integrierten Fasern verschlossen wird, welche sodann einen faserverstärkten Kunststoffverschluss für die erste Kunststoffdeckschicht, insbesondere für die Reparaturöffnung, bilden. Die faserverstärkte Kunststoffdeckschicht umfasst sodann das ausgehärtete Harz mit den integrierten Fasern. Dabei kann auch eine Aushärtung des Prepreg-Materials und/oder des zugehörigen Matrixmaterials erfolgen. Außerdem wird das flüssige Harz ausgehärtet, das zwischen den Kunststoffdeckschichten eingeströmt ist. Bei dem Aushärten des flüssigen Harzes verbindet das Harz sodann den Reparatur-Kern mit dem übrigen Kern. Außerdem entsteht durch das ausgehärtete Harz eine Verbindung zwischen dem Reparatur-Kern und der ersten Kunststoffdeckschicht. Die Kunststoffdeckschicht wiederum verbindet sich beim Aushärten des Harzes mit der ersten Kunststoffdeckschicht. Sofern sich der Reparatur-Kern bis zu der zweiten Kunststoffdeckschicht erstreckt, erfolgt durch das Aushärten des Harzes auch eine Verbindung zu der zweiten Kunststoffdeckschicht. Das reparierte Sandwichbauelement weist deshalb nach der Reparatur zumindest im Wesentlichen die ursprünglichen mechanischen Eigenschaften auf.

Zuvor wurde bereits erwähnt, dass der Kern und/oder der Reparatur-Kern von einem festen Schaum, insbesondere Hartschaum, gebildet sein kann. Bei der Herstellung kann der Schaum verformbar, insbesondere elastisch verformbar, ausgestaltet sein. Wird der Schaum durch flüssiges Harz bedeckt und/oder damit versetzt, insbesondere falls der Schaum offenporig ist, so gewinnt der Schaum bei der Aushärtung des flüssigen Harzes an Festigkeit. Nur zur Klarstellung sei an dieser Stelle erwähnt, dass mit dem Schaum kein flüssiger Schaum gemeint ist. Alternativ kann der Kern und/oder der Reparatur-Kern von einem anderen Material mit Poren, wie beispielsweise Kork, gebildet sein. Bei der Reparatur des Sandwichbauelements werden dabei analoge Vorteile und/oder Effekte erreicht.

Nach dem Aushärten des flüssigen Harzes kann das Abdeckelement entfernt werden. Im Anschluss kann außerdem eine Oberflächenbehandlung des Kunststoffverschlusses erfolgen.

Eine vorteilhafte Ausgestaltung des Verfahrens zeichnet sich dadurch aus, dass das Aushärten des flüssigen Harzes durch ein Erwärmen des flüssigen Harzes erfolgt. Dazu kann dem flüssigen Harz und/oder dem Sandwichbauelement im Reparaturbereich Wärmeenergie zugeführt werden. Dies kann beispielsweise durch eine Heizung erfolgen, die Wärmestrahlung an das Sandwichbauelement abgibt. Dazu kann beispielsweise eine Wärmelampe verwendet werden. Durch die Erwärmung härtet das flüssige Harz aus. Alternativ kann es vorgesehen sein, dass zur Erwärmung eine Vorrichtung verwendet wird, die Wärmeluft an das Sandwichbauelement zuführt, so dass das flüssige Harz erwärmt wird und damit aushärtet. Weiterhin kann es vorgesehen sein, dass die Erwärmung des flüssigen Harzes mittels einer Vorrichtung erfolgt, die Mikrowellen und/oder Ultraschall an das flüssige Harz aussendet, so dass sich das Harz aufgrund der Mikrowellen bzw. des Ultraschalls erwärmt und damit aushärtet. Weiterhin kann es ergänzend und/oder alternativ vorgesehen sein, dass das flüssige Harz vorgewärmt durch die Hohlnadel in den Reparatur-Kern strömt. Durch die Vorwärmung härtet das Material nach einer bestimmten Zeit selbstständig aus.

Gemäß einer weiteren vorteilhaften Ausgestaltung des Verfahrens weist das Verfahren außerdem den folgenden Verfahrensschritt auf: Auflegen einer fluiddurchlässigen Platte auf die erste Kunststoffdeckschicht, so dass sich die fluiddurchlässige Platte vollständig über die Reparaturöffnung erstreckt. Dieser Verfahrensschritt ist nach dem Einlegen der Fasern und vor dem Auflegen des Abdeckelements auszuführen. Die fluiddurchlässige Platte ist vorzugsweise derart ausgestaltet, dass sie von dem flüssigen Harz in Querrichtung, Normalrichtung oder in einer beliebigen Richtung durchströmbar ist. Die fluiddurchlässige Platte kann porös ausgestaltet sein, so dass das flüssige Harz durch entsprechende Poren strömen kann. Außerdem ist die fluiddurchlässige Platte derart ausgebildet, dass durch sie auch Luft strömen kann, und zwar in Analogie zu dem flüssigen Harz. Die fluiddurchlässige Platte dient zum Verteilen des flüssigen Harzes oberhalb der Fasern, die in die Reparaturöffnung eingelegt sind. Strömt das flüssige Harz also von dem Reparatur-Kern zu den Fasern, trifft das flüssige Harz daraufhin auf die fluiddurchlässige Platte, an der eine Verteilung des flüssigen Harzes über die Fasern erfolgen kann. Die fluiddurchlässige Platte kann somit die Funktion einer Fließhilfe bilden. Vorzugsweise ist die fluiddurchlässige Platte fest und/oder zumindest im Wesentlichen formstabil ausgebildet. Damit wird verhindert, dass sich die fluiddurchlässige Platte in Richtung der Reparaturöffnung bzw. der Fasern durchbiegt. Außerdem wird damit gewährleistet, dass die Reparaturöffnung mit der Reparatur vollständig von dem Harz mit den eingebrachten Fasern verschlossen wird, um die Reparaturöffnung durch den zu entstehenden faserverstärkten Kunststoffverschluss zu verschließt.

Eine weitere vorteilhafte Ausgestaltung des Verfahrens zeichnet sich dadurch aus, dass der von der Reparaturöffnung abgewandte Endabschnitt des Reparatur-Kerns von einem Drittel oder einem Fünftel des Reparatur-Kerns gebildet ist, der von der Reparaturöffnung am weitesten entfernt angeordnet ist. Damit wird sichergestellt, dass das flüssige Harz, welches mittels der Nadelspitze der Hohlnadel in den Reparatur-Kern einströmt, nicht an einem Abschnitt des Reparatur-Kerns einströmt, der der Reparaturöffnung zugewandt ist oder naheliegend ist. Vielmehr tritt das flüssige Harz durch die Nadelspitze in dem von der Reparaturöffnung am weitesten entfernten Endabschnitt in den Reparatur-Kern ein, so dass das flüssige Harz den Reparatur-Kern vollständig umströmen und/oder durchströmen kann, bevor das flüssige Harz zu den Fasern bzw. der Reparaturöffnung fließt. Diese Ausgestaltung verhindert also effektiv, dass sich Lufteinschlüsse innerhalb des Sandwichbauelements durch die Reparatur bilden, die die mechanischen Eigenschaften des zu reparierenden Sandwichbauelements nachteilig beeinflussen könnten.

Eine weitere vorteilhafte Ausgestaltung des Verfahrens zeichnet sich dadurch aus, dass das Abdeckelement einen Dichtungs-Durchstichabschnitt aufweist, durch den die Hohlnadel gestochen wird. Der Dichtungs-Durchstichabschnitt zeichnet sich deshalb vorzugsweise dadurch aus, dass dieser von der Spitze der Hohlnadel und sodann von der Hohlnadel durchstochen werden kann. Außerdem hat es sich als vorteilhaft erwiesen, wenn der Dichtungs-Durchstichabschnitt derart ausgebildet ist, dass eine Dichtung zwischen der Hohlnadel, insbesondere der radial außenseitigen Mantelfläche der Hohlnadel, und dem Dichtungs-Durchstichabschnitt entsteht, wenn die Hohlnadel durch den Dichtungs-Durchstichabschnitt gestochen wird. Der Dichtungs-Durchstichabschnitt kann beispielsweise aus Gummi, Silikon, Polyurethan und/oder einem anderen selbstdichtenden Material hergestellt sein oder dieses zumindest aufweisen. Das Abdeckelement kann also beispielsweise einen Abschnitt aus Gummi oder Silikon aufweisen, der den Dichtungs-Durchstichabschnitt des Abdeckelements bildet, wobei die Hohlnadel mit der zugehörigen Spitze durch das Gummi bzw. Silikon gestochen wird. Dabei wird das Gummi bzw. Silikon so weit aufgestochen, dass sich das Gummi bzw. Silikon um die Außenwandung der Hohlnadel legt und dabei eine Dichtung zwischen dem Gummi bzw. Silikon und der Außenwandung der Nadel entsteht. Dies gewährleistet, dass beim Absaugen des Fluids durch den ersten Kanal im Gegenzug flüssiges Harz durch die Hohlnadel gesaugt wird, so dass das flüssige Harz daraufhin durch die Spritze in den Reparatur-Kern strömen kann. Außerdem verhindert der Dichtungs-Durchstichabschnitt, dass versehentlich eine sogenannte Nebenluft abgesaugt wird. Der Dichtungs-Durchstichabschnitt bildet vorzugsweise einen integralen Teil des Abdeckelements. So kann der Dichtungs-Durchstichabschnitt als ein Element ausgebildet sein, das beispielsweise in eine Zeltwandung integriert ist, sofern das Abdeckelement nach Art eines Zelts ausgebildet ist. Entsprechendes gilt in analoger Weise für die weiteren Ausgestaltungsmöglichkeiten des Abdeckelements.

Eine weitere vorteilhafte Ausgestaltung des Verfahrens zeichnet sich dadurch aus, dass das Abdeckelement als eine Abdeckplatte, insbesondere als eine Gummi-Abdeckplatte oder als eine Silikon-Abdeckplatte, ausgebildet ist. Sofern das Abdeckelement als eine Abdeckplatte ausgebildet ist, kann die Abdeckplatte eine besonders geringe Wandungsstärke aufweisen, so dass dieses besonders kompakt ist. Außerdem lässt sich eine Abdeckplatte besonders gut handhaben. Die Abdeckplatte kann dazu fest, starr und/oder formstabil ausgebildet sein. Alternativ oder ergänzend hat es sich als vorteilhaft erwiesen, wenn die Abdeckplatte als eine Gummi- oder Silikon-Abdeckplatte ausgebildet ist. Für beide zuvor genannten Ausgestaltungsvarianten gilt, dass die Abdeckplatte den Dichtungs-Durchstichabschnitt zugleich integral ausbilden kann. Dies erleichtert die Handhabung der Hohlnadel beim Durchstechen der Abdeckplatte, da der Anwender nicht notwendigerweise darauf zu achten hat, wo der Dichtungs-Durchstichabschnitt ist. Vielmehr kann der Anwender die Hohlnadel an einer beliebigen Stelle durch die Abdeckplatte stechen, sofern die Spitze der Hohlnadel daraufhin in den Reparatur-Kern ragt. Außerdem bietet die Gummiund/oder Silikon-Abdeckplatte den Vorteil, dass beim Auflegen der Abdeckplatte auf die erste Kunststoffdeckschicht eine umlaufende bzw. ringförmige Dichtfläche und eine entsprechende Dichtung zu der ersten Kunststoffdeckschicht entsteht. Eine separate Abdichtung der Abdeckplatte zu der ersten Kunststoffdeckschicht ist deshalb nicht unbedingt nötig. Vielmehr kann sich die Dichtung durch das Auflegen selbsttätig bilden.

Eine weitere vorteilhafte Ausgestaltung des Verfahrens zeichnet sich dadurch aus, dass ein Dichtungselement auf der von der Reparaturöffnung abgewandten Seite des Abdeckelements angeordnet ist, wobei das Dichtungselement fluiddicht, insbesondere gasdicht, mit dem Abdeckelement verbunden ist und wobei die Hohlnadel durch das Dichtungselement in das Abdeckelement gestochen wird. Wird die Hohlnadel durch das Dichtungselement in das Abdeckelement gestochen, so bildet sich zwischen der Hohlnadel und dem Dichtungselement eine Dichtung aus. Das Dichtungsmittel kann dazu ausgebildet sein, dass dies von der Hohlnadel durchstechbar ist und/oder von einem selbstdichtenden Material gebildet ist. Diese Ausgestaltung ist insbesondere dann von Vorteil, wenn sich beim Durchstechen des Abdeckelements keine Dichtung zwischen dem Abdeckelement und der Hohlnadel ausbildet. Die Dichtungsfunktion kann sodann von dem Dichtungselement bereitgestellt werden. Vorzugsweise ist das Dichtungselement als ein Gummi-Dichtungselement, als ein Silikon-Dichtungselement oder als ein Polyurethan-Dichtungselement ausgebildet.

Eine vorteilhafte Ausgestaltung des Verfahrens zeichnet sich dadurch aus, dass sich eine fluiddichte Dichtung zwischen einer radial außenseitigen Wandung der Hohlnadel und dem Dichtungselement beim Einstechen der Hohlnadel in das Dichtungselement ausbildet. Beim Einstechen der Hohlnadel in das Dichtungselement wird dieses also aufgestochen und aufgrund des Durchmessers der Hohlnadel verformt, was dazu führt, dass das Dichtungselement fest an der radial außenseitigen Wandung der Hohlnadel anliegt und damit die fluiddichte Dichtung ausbildet. Ist das Dichtungselement beispielsweise als Gummi-Dichtungselement ausgebildet, so entsteht an dem Übergang von der radial außenseitigen Wandung der Hohlnadel zu dem Gummi des Gummi-Dichtungselements eine besonders fluiddichte Dichtung.

Eine weitere vorteilhafte Ausgestaltung des Verfahrens zeichnet sich dadurch aus, dass das Dichtungselement derart ausgebildet ist, dass sich das Dichtungselement mit dem Herausziehen der Hohlnadel fluiddicht verschließt. Dazu ist das Dichtungselement bevorzugt elastisch verformbar ausgebildet. Wird ein Teil des Dichtungselements durch das Einstechen der Nadel zunächst in eine Richtung elastisch verformt, so erfolgt eine Rückverformung beim Herausziehen der Hohlnadel, so dass sich das Dichtungselement wieder fluiddicht verschließt. Diese Ausgestaltung bietet den Vorteil, dass mit dem Herausziehen der Hohlnadel nicht versehentlich Luft in den Reparaturbereich des Kerns des Sandwichbauelements und/oder in den Bereich der Reparaturöffnung strömt, was anderenfalls zu einer negativen Materialbeeinflussung des zu reparierenden Sandwichbauelements führen könnte.

Eine weitere vorteilhafte Ausgestaltung des Verfahrens zeichnet sich dadurch aus, dass zumindest ein Teil des flüssigen Harzes während des Absaugens des Fluids durch eine Grenzschicht zwischen dem Reparatur-Kern und dem Kern des Sandwichbauelements strömt. Mit dem Kern des Sandwichbauelements ist hierbei vorzugsweise der Teil des Kerns des Sandwichbauelements gemeint, der nicht durch den Reparatur-Kern gebildet ist. Somit bildet sich eine Grenzschicht zwischen dem Reparatur-Kern und dem übrigen Kern des Sandwichbauelements aus. Diese Grenzschicht wird von dem flüssigen Harz durchströmt, wobei das flüssige Harz nach dem Beenden des Absaugens und dem Herausziehen der Nadel in bzw. an der Grenzschicht verbleibt. Mit dem Aushärten des flüssigen Harzes entsteht deshalb eine feste Verbindung zwischen dem Reparatur-Kern und dem übrigen Kern des Sandwichbauelements, was dazu beiträgt, dass das reparierte Sandwichbauelement die ursprünglichen mechanischen Eigenschaften wiedergewinnt.

Eine weitere vorteilhafte Ausgestaltung des Verfahrens zeichnet sich dadurch aus, dass in den Kern mehrere Verstärkungsstifte eingebracht sind, die sich jeweils von einer Innenseite der ersten Kunststoffdeckschicht zu einer Innenseite der zweiten Kunststoffdeckschicht erstrecken und mit dieser mechanisch verbunden sind. Mit den mehreren Verstärkungsstiften sind nicht notwendigerweise alle Verstärkungsstifte in dem Kern gemeint. Vielmehr können damit auch einige der Verstärkungsstifte in dem Kern gemeint sein. Die Verstärkungsstifte können sich orthogonal zu der ersten Kunststoffdeckschicht und/oder der zweiten Kunststoffdeckschicht erstrecken. Alternativ ist es möglich, dass zumindest ein Teil der Verstärkungsstifte schräg zu der ersten und/oder zweiten Kunststoffdeckschicht ausgerichtet sind. Die Verstärkungsstifte dienen zur Verbesserung der mechanischen Eigenschaften des Sandwichbauelements. So kann mittels der Verstärkungsstifte die Steifigkeit des Sandwichbauelements erhöht sein.

Eine weitere vorteilhafte Ausgestaltung des Verfahrens zeichnet sich dadurch aus, dass in den Reparatur-Kern mehrere Verstärkungsstifte eingebracht sind, die sich nach dem Ersetzen des Teils des Kerns durch den Reparatur-Kern jeweils von einer Innenseite der ersten Kunststoffdeckschicht und/oder von einer Grenzschicht zwischen dem Reparatur-Kern und dem Kern des Sandwichbauelements zu der Reparaturöffnung erstrecken. Die Verstärkungsstifte können dabei einen Teil der Verstärkungsstifte des Reparatur-Kerns bilden. Die Verstärkungsstifte können sich orthogonal, schräg oder nach einer anderen Art zu der Reparaturöffnung erstrecken. Indem der Reparatur-Kern ebenfalls Verstärkungsstifte aufweist, kann gewährleistet werden, dass mit einem derartigen Reparatur-Kern die ursprünglichen mechanischen Eigenschaften des Sandwichbauelements wieder erreichbar sind.

Eine weitere vorteilhafte Ausgestaltung des Verfahrens zeichnet sich dadurch aus, dass die in den Reparatur-Kern eingebrachten Verstärkungsstifte durch das Aushärten des flüssigen Harzes mit der zweiten Kunststoffdeckschicht und/oder dem Kunststoffverschluss stoffschlüssig verbunden werden. Die Verbindung kann zusätzlich oder alternativ durch eine formschlüssige und/oder kraftschlüssige Verbindung ausgebildet sein, beispielsweise durch ein Vernähen. Durch die Verbindung zwischen den Verstärkungsstiften und der zweiten Kunststoffdeckschicht bzw. dem Kunststoffverschluss wird eine besonders feste Verbindung zwischen dem Reparatur-Kern und der zweiten Kunststoffdeckschicht bzw. dem Kunststoffverschluss geschaffen, was ebenfalls zur Verbesserung der mechanischen Eigenschaften des zu reparierenden Sandwichbauelements beiträgt. Somit können die ursprünglichen mechanischen Eigenschaften des Sandwichbauelements wiederhergestellt werden.

Eine weitere vorteilhafte Ausgestaltung des Verfahrens zeichnet sich dadurch aus, dass die Verstärkungsstifte als Glasfaser-Verstärkungsstifte, als Karbonfaser-Verstärkungsstifte, als Polyaramid-Verstärkungstifte und/oder als Polyamidfaser-Verstärkungsstifte ausgebildet sind. Für das Polyamid kann beispielsweise Polyamid 6 und/oder Polyamid 6.6 vorgesehen sein. Grundsätzlich können die Verstärkungsstifte auch von einem anderen faserverstärkten Material gebildet sein. Derartige Verstärkungsstifte weisen eine besonders Zugfestigkeit bei einem gleichzeitig besonders geringen Gewicht auf. Somit kann das Sandwichbauelement besonders hohen mechanischen Belastungen standhalten und zugleich ein besonders geringes Gewicht bieten.

Eine weitere vorteilhafte Ausgestaltung des Verfahrens zeichnet sich dadurch aus, dass zumindest ein Teil des flüssigen Harzes während des Absaugens des Fluids durch eine Grenzschicht zwischen dem Reparatur-Kern und den darin eingebrachten Verstärkungsstiften strömt. Das flüssige Harz kann dabei die entsprechende Grenzschicht füllen. Das flüssige Harz verbleibt dabei in der genannten Grenzschicht, wenn das Absaugen des Fluids beendet wird bzw. wenn die Nadel herausgezogen wird. Erfolgt daraufhin die Aushärtung des flüssigen Harzes, entsteht zwischen den Verstärkungsstiften und dem übrigen Teil des Reparatur-Kerns eine insbesondere feste Verbindung, was die mechanischen Eigenschaften des Reparatur-Kerns und somit des reparierten Sandwichbauelements positiv beeinflusst. Insbesondere wird verhindert, dass in der Grenzschicht keine Lufteinschlüsse vorhanden sind.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt eine Ausgestaltung eines zu reparierenden Sandwichbauelements in einer schematischen Querschnittsansicht.
- Fig. 2: zeigt einen Ablaufplan für eine Ausgestaltung des Verfahrens.
- Fig. 3: zeigt einen Ablaufplan für eine weitere Ausgestaltung des Verfahrens.

### DETAILLIERTE DARSTELLUNG EXEMPLARISCHER AUSFÜHRUNGSFORMEN

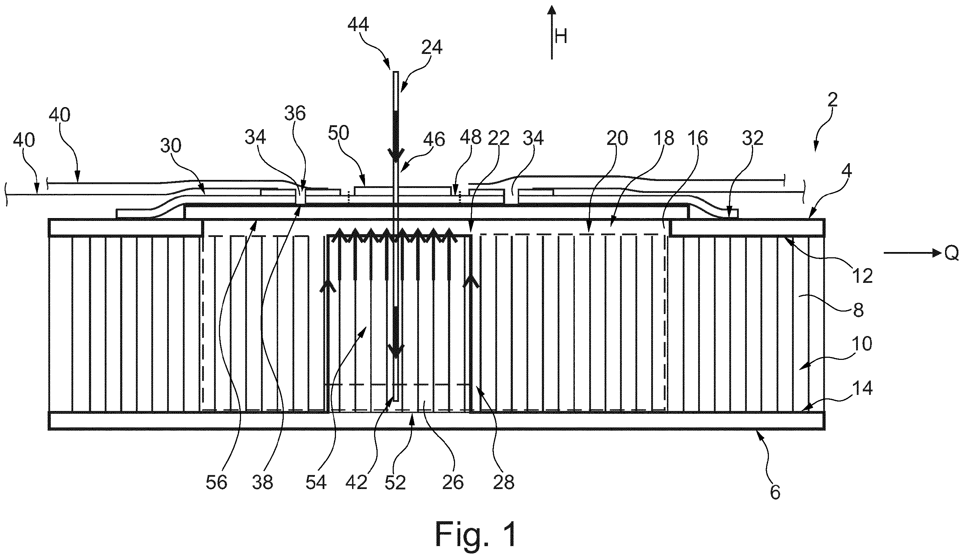

In der Fig. 1 ist ein Sandwichbauelement 2 in einer schematischen Querschnittsansicht wiedergegeben. Das Sandwichbauelement 2 weist eine erste, faserverstärkte Kunststoffdeckschicht 4, eine zweite Kunststoffdeckschicht 6 und einen Kern 8 auf, der zwischen der ersten Kunststoffdeckschicht 4 und der zweiten Kunststoffdeckschicht 6 angeordnet ist. Die erste Kunststoffdeckschicht ist mit Fasern verstärkt. Dazu können die Fasern in einem ausgehärteten Matrixmaterial der ersten Kunststoffdeckschicht 4 angeordnet sein. Das Matrixmaterial ist vorzugsweise ein ausgehärtetes Harz. Die zweite Kunststoffdeckschicht 6 kann ohne eine Faserverstärkung ausgebildet sein. Bevorzugt ist jedoch, dass die zweite Kunststoffdeckschicht 6 ebenfalls als eine faserverstärkte Kunststoffdeckschicht ausgebildet ist. Sie kann in analoger Weise wie die erste Kunststoffdeckschicht 4 ausgebildet sein. Der Kern 8, der sich zwischen der ersten Kunststoffdeckschicht 4 und der zweiten Kunststoffdeckschicht 6 erstreckt, ist vorzugsweise durch einen festen Schaum, insbesondere einen Hartschaum, gebildet. Der Schaum kann verformbar ausgebildet sein. Außerdem weist der Kern 8 Verstärkungsstifte 10 auf, die sich jeweils von der ersten Kunststoffdeckschicht 4 zu der zweiten Kunststoffdeckschicht 6 erstrecken. Besonders bevorzugt ist, wenn sich die Verstärkungsstifte 10 senkrecht zu einer Innenseite 12 der ersten Kunststoffdeckschicht 4 in Richtung der zweiten Kunststoffdeckschicht 6 erstrecken. Analoges gilt für den Übergangsbereich zwischen den Verstärkungsstiften 10 und einer Innenseite 14 der zweiten Kunststoffdeckschicht 6. Weiterhin ist es bevorzugt, wenn der Kern 8 mit einem ausgehärteten Harz versetzt ist, was die Formstabilität und/oder die Steifigkeit des Kerns 8 positiv beeinflusst.

In der Praxis kann es vorkommen, dass eine der Deckschichten 4, 6 beschädigt wird. Dies kann beispielsweise dann vorkommen, wenn das Sandwichbauelement 2 mit einem anderen Bauteil kollidiert, so dass beispielsweise die erste Kunststoffdeckschicht 4 sowie zumindest ein Teil des darunter angeordneten Kerns 8 beschädigt wird. In diesem Fall ist das Sandwichbauelement 2 in dem entsprechenden Beschädigungsbereich mechanisch geschwächt, was eine Reparatur des Sandwichbauelements 2 hervorruft.

Um das Sandwichbauelement 2 zu reparieren, ist es vorgesehen, dass zunächst ein Teil 16 der ersten Kunststoffdeckschicht 4 entfernt wird. Dazu kann der Teil 16 herausgefräst werden. Alternativ ist es möglich, dass der Teil 16 der ersten Kunststoffdeckschicht 4 herausgeschliffen wird. Alternativ oder ergänzend kann das Entfernen des Teils 16 mittels eins chemischen Lösungsmittels erfolgen oder damit unterstützt werden. Durch das Entfernen des Teils 16 der ersten Kunststoffdeckschicht 4 bildet sich in dem entsprechenden Bereich eine Reparaturöffnung 18 aus. Durch die Reparaturöffnung 18 wird ein Zugang zu dem Kern 8 geschaffen, so dass durch die Reparaturöffnung ein Reparaturbereich 20 des Kerns 8 zugänglich ist. Der Reparaturbereich 20 ist durch einen gestrichelt eingegrenzten Kasten in Fig. 1 schematisch dargestellt.

Durch die Reparaturöffnung 18 kann der Kern 8 innerhalb des Reparaturbereichs 20 begutachtet werden. In der Praxis hat sich herausgestellt, dass der Kern 8 für gewöhnlich nicht im gesamten Reparaturbereich 20 beschädigt ist, sondern zumeist nur ein Teil davon. Dieser Teil des Kerns 8 wird sodann aus dem Kern 8 herausgeschnitten oder anders aus dem Kern 8 herausgetrennt und durch einen Reparatur-Kern 22 ersetzt. Die Außenmaße des Reparatur-Kerns 22 entsprechen dabei den Außenmaßen des Teils des Kerns 8, der aus dem Kern 8 herausgetrennt wird. Der Reparatur-Kern 8 wird deshalb vorzugsweise formschlüssig in die entsprechende Öffnung des Kerns 8 eingesetzt. Der Reparatur-Kern 22 ist dabei vorzugsweise von einem Material gewählt, wie es ursprünglich zur Herstellung des Kerns 8 gewählt wurde. Dies gewährleistet, dass der Kern 8 mittels des Reparatur-Kerns 22 wiederhergestellt werden kann, so dass auch die ursprünglichen mechanischen Eigenschaften des Kerns 8 wiederherstellbar sind.

Ist der Reparatur-Kern in den Kern 8 eingesetzt, so werden Fasern, insbesondere gebunden an ein Matrixmaterial, so dass die Fasern beispielsweise von einem Prepreg-Material umfasst sind, in die Reparaturöffnung 18 eingelegt. Vorzugsweise erstrecken sich die Fasern sodann über die gesamte Fläche der Reparaturöffnung 18, um auch eine Reparatur der ersten Kunststoffdeckschicht derart gewährleisten zu können, dass die Reparaturöffnung 18 nach Abschluss der Reparatur durch einen faserverstärkten Kunststoffverschluss versiegelt ist, der vorzugsweise die mechanischen Eigenschaften aufweist, wie es für die erste Kunststoffdeckschicht 4 vorgesehen ist.

Ziel der weiteren Verfahrensschritte ist es, eine Grenzschicht 24 zwischen dem Reparatur-Kern 22 und dem übrigen Kern 8 sowie die Fasern in der Reparaturöffnung 18 mit flüssigem Harz zu versetzen bzw. zu bedecken und das Harz anschließend auszuhärten, so dass durch das ausgehärtete Harz die ursprünglichen mechanischen Eigenschaften des Sandwichbauelements 2 wiederhergestellt werden. Damit das flüssige Harz an die entsprechenden Stellen fließen kann, ist es vorgesehen, dass das flüssige Harz mittels einer Hohlnadel 24 in einen von der Reparaturöffnung 18 abgewandten Endabschnitt 26 des Reparatur-Kerns 22 eingespritzt wird, so dass das flüssige Harz aus dem Bereich des Endabschnitts 26 zumindest anteilig durch eine Grenzschicht 28 zwischen dem Reparatur-Kern 22 und dem übrigen Kern 8 in Richtung der Reparaturöffnung 18 strömen kann. Als vorteilhaft hat es sich erwiesen, wenn das flüssige Harz nicht durch die Hohlnadel 24 gedrückt wird, sondern wenn das flüssige Harz durch die Hohlnadel 24 gesogen wird. Um dies zu gewährleisten, wird ein Abdeckelement 30, bevorzugt in Form einer Abdeckplatte, auf die erste Kunststoffdeckschicht 4 gelegt, so dass sich das Abdeckelement 30 vollständig über die Reparaturöffnung 18 erstreckt und eine umlaufende Dichtfläche bzw. Dichtung um die Reparaturöffnung 18 zwischen dem Abdeckelement 30 und der ersten Kunststoffdeckschicht 4 entsteht. Somit wird das Abdeckelement 30 durch die umlaufende Dichtung, welche durch die umlaufende Dichtfläche 32 entsteht, fluiddicht mit der ersten Kunststoffdeckschicht 4 verbunden. Dadurch entsteht ein zumindest im Wesentlichen fluiddichter Raum 33 zwischen dem Abdeckelement 30, der ersten Kunststoffdeckschicht 4, dem Kern 8 und der zweiten Kunststoffdeckschicht 6. Das Abdeckelement 30 ist jedoch nicht vollständig fluiddicht. Vielmehr weist das Abdeckelement 30 einen ersten Kanal 34 auf, der sich von einer oberseitigen Kanalöffnung 36 zu einer unterseitigen Kanalöffnung 38 erstreckt, wobei die unterseitige Kanalöffnung 38 zu der Reparaturöffnung 18 gegenüberliegend angeordnet ist. Der erste Kanal 34 bildet also eine Zugangsöffnung zu der Reparaturöffnung 18. Durch den ersten Kanal 34 kann deshalb Fluid, insbesondere Luft, aus dem darunteliegenden Raum 33 abgesaugt werden. Um dies zu ermöglichen, ist die oberseitige Kanalöffnung 36 beispielsweise mit einem Vakuumbeutel 40 verbunden, der dazu ausgebildet ist, Fluid, insbesondere Luft, abzusaugen. Der Vakuumbeutel 40 ist in Fig. 1 nur teilweise dargestellt. Alternativ kann es vorgesehen sein, dass die oberseitige Kanalöffnung 36 mit einer Fluidabsaugeinheit verbunden ist, um ein Fluid, insbesondere Luft, durch den ersten Kanal 34 abzusaugen. Weitere Ausgestaltungen zum Absaugen von Fluid durch den ersten Kanal sind denkbar. Außerdem ist es möglich, dass nicht nur ein erster Kanal 34, sondern mehrere erste Kanäle 34 vorgesehen sind, wie es in Fig. 1 auch exemplarisch dargestellt ist.

Um das flüssige Harz mittels der Hohlnadel 24 in den Endabschnitt 26 einströmen zu lassen, ist es vorgesehen, die Hohlnadel 24 durch das Abdeckelement 30 und die Fasern in der Reparaturöffnung 18 sowie in den Reparatur-Kern 22 einzustechen, so dass die Spitze 42 der Hohlnadel 24 bis in den von der Reparaturöffnung 18 abgewandten Endabschnitt 26 des Reparatur-Kerns 22 ragt. Die Spitze 42 bildet zugleich eine Ausgangsöffnung der Hohlnadel 24. Außerdem ist es vorgesehen, dass ein von der Spitze 42 abgewandtes Ende 44 der Hohlnadel 24 mit einem Behälter mit flüssigem Harz verbunden ist, so dass das flüssige Harz aus dem Behälter durch eine entsprechende Fluidverbindung zu dem Ende 44 der Hohlnadel 24 strömen kann. Der Behälter sowie die Fluidverbindung sind in Fig. 1 nicht dargestellt.

Vorteilhaft hat es sich erwiesen, wenn sich eine fluiddichte Dichtung zwischen einer radial außenseitigen Wandung 46 der Hohlnadel 24 und dem Abdeckelement 30 beim Einstechen der Nadel 24 in das Abdeckelement 30 ausbildet. Dies ist insbesondere dann der Fall, wenn das Abdeckelement 30 als ein Gummi-Abdeckelement oder als ein Silikon-Abdeckelement ausgebildet ist. Beim Einstechen der Hohlnadel 24 wird das Abdeckelement 30 lokal aufgestochen, so dass der angrenzende Materialbereich des Abdeckelements 30 elastisch gestaucht wird und somit eine fluiddichte Dichtung zwischen dem Abdeckelement 30 und der Außenwandung 46 der Hohlnadel 24 entsteht. Weiterhin hat es sich als vorteilhaft erwiesen, wenn das Abdeckelement 30 einen Dichtungs-Durchstichabschnitt 48 aufweist, der dazu ausgebildet ist, die zuvor genannte fluiddichte Dichtung zwischen der Außenwandung 46 der Hohlnadel 24 und dem Dichtungs-Durchstichabschnitt 48 auszubilden. Denn in diesem Fall ist es möglich, dass ausschließlich der Dichtungs-Durchstichabschnitt 48 des Abdeckelements 30 entsprechend ausgebildet ist, beispielsweise in Form eines Gummi-Dichtungs-Durchstichabschnitts oder in Form eines Silikon-Dichtungs-Durchstichabschnitts.

Zur Verbesserung des zuvor genannten Dichtungseffekts und/oder zur alternativen Ausbildung einer entsprechenden Dichtung hat es sich als vorteilhaft erwiesen, wenn ein Dichtungselement 50 auf der von der Reparaturöffnung 18 abgewandten Seite des Abdeckelements 30 angeordnet ist, wobei das Dichtungselement 50 fluiddicht, insbesondere gasdicht, mit dem Abdeckelement 30 verbunden ist, und wobei die Hohlnadel 24 durch das Dichtungselement 50 in das Abdeckelement 30 gestochen wird. Das Dichtungselement 50 kann beispielsweise als Gummi-Dichtungselement oder als Silikon-Dichtungselement ausgebildet sein. Wird die Hohlnadel 24 durch das Dichtungselement 50 gestochen, so bildet sich eine fluiddichte Dichtung zwischen der radial außenseitigen Wandung 46 der Hohlnadel 24 und dem Dichtungselement 50 aus. Indem das Dichtungselement 50 fluiddicht mit dem Abdeckelement 30 verbunden ist, wird also die Hohlnadel 24 entsprechend dicht gegenüber dem Abdeckelement 30 abgedichtet. Damit ist es möglich, dass zwischen der Hohlnadel 24 und dem Abdeckelement 30 als solches keine unmittelbare Dichtung ausgebildet werden muss. Dies bietet die Möglichkeit, dass das Abdeckelement 30 aus einem besonders festen und/oder starren Material hergestellt ist, was ein Durchbiegen des Abdeckelements 30 in Richtung der Reparaturöffnung 18 verhindert.

Nachdem die Fluidverbindung zwischen dem Behälter mit dem flüssigen Harz und der Hohlnadel 24 hergestellt ist, erfolgt ein Absaugen von Fluid, insbesondere Luft, durch den ersten Kanal 34 aus der Reparaturöffnung 18 und dem darunter angeordneten Reparaturbereich 20, so dass flüssiges Harz aus dem Behälter und sodann durch die Hohlnadel 24 in den Endabschnitt 26 des Reparatur-Kerns 22 einströmt. Dabei verteilt sich das flüssige Harz zunächst in einem Bodenbereich 52 des Reparatur-Kerns 22. Das Absaugen des flüssigen Harzes wird bewirkt, da das Abdeckelement 30 fluiddicht mit der ersten Kunststoffdeckschicht 4 verbunden ist und eine fluiddichte Dichtung zumindest indirekt zwischen dem Abdeckelement 30 und der Hohlnadel 24 besteht. Durch das Absaugen des Fluids bzw. der Luft aus dem ersten Kanal 34 entsteht deshalb in der Reparaturöffnung 18 und in dem Reparaturbereich 20 ein Unterdruck, der auch auf den Innenraum der Hohlnadel 24 wirkt, was das Absaugen des flüssigen Harzes aus dem Behälter verursacht. Nachdem das flüssige Harz zunächst in den Bodenbereich 52 eingeströmt ist, fließt das flüssige Harz durch eine Grenzschicht 28 zwischen dem Reparatur-Kern 22 und dem übrigen Kern 8 und/oder entlang einer weiteren Grenzschicht 53 zwischen Verstärkungsstiften 54, die in dem Reparatur-Kern 22 angeordnet sind, und dem porenartigen Material des Reparatur-Kerns 22 in Richtung der Reparaturöffnung 18. Das Fließverhalten des flüssigen Harzes ist in Fig. 1, insbesondere mit Hinblick auf die Hohlnadel 24 und die genannten Grenzschichten 28, 53, durch überlagerte Pfeile angedeutet.

Wird das Absaugen des Fluids durch den ersten Kanal 34 weiter fortgesetzt, so strömt das flüssige Harz in oder um die Fasern in der Reparaturöffnung 18, so dass diese mit flüssigem Harz versetzt und/oder bedeckt sind. Das Absaugen wird daraufhin beendet. Alternativ kann es vorgesehen sein, dass das Absaugen noch für eine bestimmte Zeit fortgesetzt wird, um sicherzustellen, dass in dem flüssigen Harz keine Lufteinschlüsse sind.

Um die Verteilung des flüssigen Harzes im Bereich der Reparaturöffnung 18 zu verbessern, hat es sich als vorteilhaft erwiesen, wenn eine fluiddurchlässige Platte 56 auf die erste Kunststoffdeckschicht 4 gelegt wird, bevor das Auflegen des Abdeckelements 30 erfolgt. Die fluiddurchlässige Platte 56 wird dabei derart auf die erste Kunststoffdeckschicht 4 gelegt, dass sich diese vollständig über die Reparaturöffnung 18 erstreckt. Die fluiddurchlässige Platte 56 weist Poren, Kanäle und/oder unterseitige Ausnehmungen auf, durch die das flüssige Harz in Querrichtung Q des Sandwichbauteils 2 fließen bzw. strömen kann, um eine besonders gute Verteilung des flüssigen Harzes in der Reparaturöffnung 18 zu gewährleisten. Das Abdeckelement 30 wird oberhalb der fluiddurchlässigen Platte 56 platziert bzw. aufgelegt und erstreckt sich in Querrichtung Q vollständig über die fluiddurchlässige Platte 56 hinaus, so dass weiterhin die ringförmige Dichtfläche 32 bzw. Dichtung um die Reparaturöffnung 18 zwischen dem Abdeckelement 30 und der ersten Kunststoffdeckschicht 4 entstehen kann. Indem sich das Abdeckelement 30 vollständig über die fluiddurchlässige Platte 56 erstreckt, erstreckt sich das Abdeckelement 30 damit auch vollständig über die Reparaturöffnung 18. Um das Absaugen des Fluids durch den ersten Kanal 34 weiterhin zu gewährleisten, ist die fluiddurchlässige Platte 56 auch in Horizontalrichtung H, also einer Richtung von der Reparaturöffnung 18 zu dem ersten Kanal 34, fluiddurchlässig. Dazu kann die fluiddurchlässige Platte 56 entsprechende Kanäle, Poren oder andere durchgehende Öffnungen aufweisen.

Nachdem die Fasern in der Reparaturöffnung 18 vollständig mit flüssigem Harz bedeckt und/oder vernetzt sind und das Absaugen des Fluids durch den ersten Kanal 34 beendet wurde, wird die Hohlnadel 24 aus dem Sandwichbauteil 2, der fluiddurchlässigen Platte 56, dem Abdeckelement 30 und dem Dichtelement 50 herausgezogen. Beim Herausziehen der Hohlnadel 24 verschließt sich das Dichtelement 50 selbstständig wieder, so dass verhindert wird, dass ein Fluid, insbesondere Luft, durch das Dichtelement 50 zu dem flüssigen Harz gelangen kann, was einen stabilen Zustand für die weiteren Verfahrensschritte gewährleistet.

Anschließend erfolgt ein Aushärten des flüssigen Harzes in dem Sandwichbauelement 2. Das Aushärten des flüssigen Harzes erfolgt vorzugsweise durch Energiezufuhr, beispielsweise in Form von Wärmezufuhr. So kann das flüssige Harz durch eine Wärmelampe oder ein Wärmegebläse erwärmt werden. Weiterhin oder alternativ kann es vorgesehen sein, dass das flüssige Harz durch Bestrahlung, beispielsweise durch Bestrahlung mittels Mikrowellen und/oder Ultraschall, ausgehärtet wird. Das Aushärten des flüssigen Harzes hat den Effekt, dass die Reparaturöffnung 18 von dem ausgehärteten Harz mit integrierten Fasern verschlossen wird, welche sodann einen festen Kunststoffverschluss für die Reparaturöffnung 18 der ersten Kunststoffdeckschicht 4 bilden. Der faserverstärkte Kunststoffverschluss weist dabei vorzugsweise die gleichen mechanischen Eigenschaften auf wie die erste Kunststoffdeckschicht 4. Weiterhin wurde durch das Aushärten des flüssigen Harzes eine feste Verbindung zwischen dem Reparatur-Kern 22 und dem übrigen Kern 8 des Sandwichbauteils 2 geschaffen. Außerdem kann durch das ausgehärtete Harz eine feste Verbindung zwischen dem Reparatur-Kern 22 und dem faserverstärkten Kunststoffverschluss, der nunmehr einen Teil der ersten Kunststoffdeckschicht 4 bildet, geschaffen werden. Sofern sich der Reparatur-Kern 22 bis zu der zweiten Kunststoffdeckschicht 6 erstreckt, kann durch das ausgehärtete Harz auch eine feste Verbindung zwischen der zweiten Kunststoffdeckschicht 6 geschaffen werden. Sofern der Reparatur-Kern 22 die in Fig. 1 gezeigten Verstärkungsstifte 54 aufweist, wird auch zwischen diesen und dem restlichen Material des Reparatur-Kerns 22 eine feste Verbindung geschaffen. Weiterhin kann der Reparatur-Kern 22 offenporig ausgestaltet sein, so dass der Reparatur-Kern 22 von dem flüssigen Harz durchsetzt wurde, welches nunmehr ausgehärtet ist, und die mechanischen Eigenschaften des Reparatur-Kerns 22 positiv beeinflusst. Der Reparatur-Kern 22 kann somit die gleichen mechanischen Eigenschaften aufweisen wie der ursprüngliche Kern 8 des Sandwichbauelements 2. Mit dem erläuterten Verfahren kann das Sandwichbauelement 2 also vollständig repariert werden, so dass die ursprünglichen mechanischen Eigenschaften zumindest annähernd und/oder im Wesentlichen wiederhergestellt sind. Außerdem bietet das erläuterte Verfahren den Vorteil, dass zur Reparatur nicht beide Deckschichten 4, 6 geöffnet werden müssen. Vielmehr reicht es aus, wenn eine der beiden Deckschichten 4, 6 von außen zugänglich ist, um das Reparaturverfahren auszuführen. Ist also eine der beiden Deckschichten 4, 6 in einem Fahrzeug durch weitere Bauelemente verdeckt, so kann das Reparaturverfahren dennoch von der anderen Seite aus ausgeführt werden. Dies spart Zeit, Aufwand und reduziert damit die entsprechenden Kosten.

Nachdem das flüssige Harz ausgehärtet ist, können das Abdeckelement 30 und gegebenenfalls die fluiddurchlässige Platte 56 entfernt werden. Weiterhin kann eine Oberflächennachbehandlung an der Außenseite des Kunststoffverschlusses, der nunmehr die Reparaturöffnung 18 verschlossen hat, erfolgen. So kann beispielsweise die Außenseite des Kunststoffverschlusses geschliffen und/oder poliert werden, um eine glatte Oberfläche zu erreichen, die anschließend lackierbar ist.

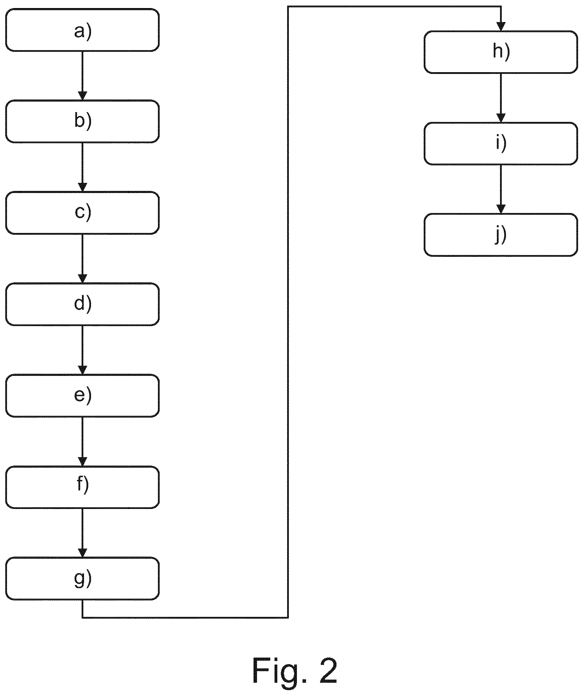

In der Fig. 2 ist ein Ablaufplan mit den Verfahrensschritten a) bis j) dargestellt, wobei die Verfahrensschritte a) bis j) zu den entsprechenden Verfahrensschritten aus Anspruch 1 korrespondieren.

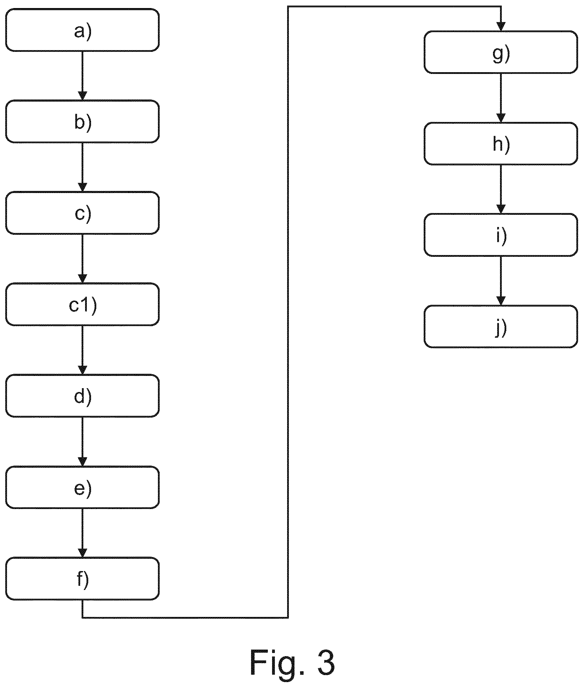

In Fig. 3 ist ein weiterer Ablaufplan dargestellt, der die Verfahrensschritte a) bis j) gemäß dem vorteilhaften Verfahren nach Anspruch 3 wiedergibt.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Verfahren zur Reparatur eines Sandwichbauelements (2), das eine erste, faserverstärkte Kunststoffdeckschicht (4), eine zweite Kunststoffdeckschicht (6) und einen Kern (8) aufweist, der zwischen der ersten und zweiten Kunststoffdeckschicht (4, 6) angeordnet ist und Poren aufweist, wobei das Verfahren die Schritte aufweist:
a) Entfernen eines Teils (16) der ersten Kunststoffdeckschicht (4) zur Bildung einer Reparaturöffnung (18), die einen Zugang zu einem Reparaturbereich (20) des Kerns (8) bildet,
b) Ersetzen zumindest eines Teils des Kerns (8) aus dem Reparaturbereich (20) durch einen Reparatur-Kern (22),
c) Einlegen von Fasern, insbesondere von einem Prepreg-Material mit den Fasern, in die Reparaturöffnung (18),
d) Auflegen eines Abdeckelements (30), vorzugsweise einer Abdeckplatte, auf die erste Kunststoffdeckschicht (4), so dass sich das Abdeckelement (30) vollständig über die Reparaturöffnung (18) erstreckt und eine ringförmige Dichtfläche (32) um die Reparaturöffnung (18) zwischen dem Abdeckelement (30) und der ersten Kunststoffdeckschicht (4) entsteht, wobei das Abdeckelement (30) einen ersten Kanal (34) aufweist, der sich von einer oberseitigen Kanalöffnung (36) zu einer unterseitigen Kanalöffnung (38) erstreckt, die zu der Reparaturöffnung (18) gegenüberliegend angeordnet ist,
**gekennzeichnet durch**
e) Einstechen einer Hohlnadel (24) durch das Abdeckelement (30) und die Fasern in den Reparatur-Kern (22), so dass eine Spitze (42) der Hohlnadel (24) bis in einen von der Reparaturöffnung (18) abgewandten Endabschnitt (26) des Reparatur-Kerns (22) ragt,
f) Herstellen einer Fluidverbindung zwischen einem Behälter mit einem flüssigen Harz und einem von der Spitze (42) abgewandten Ende (44) der Hohlnadel (24),
g) Absaugen von Fluid, insbesondere Luft, durch den ersten Kanal (34) aus dem Reparaturbereich (20), so dass flüssiges Harz durch die Hohlnadel (24) in den Endabschnitt (26) des Reparatur-Kerns (22) einströmt und zu den Fasern in der Reparaturöffnung (18) fließt,
h) Beenden des Absaugens aus Schritt g) wenn das flüssige Harz zu den Fasern geströmt ist,
i) Herausziehen der Hohlnadel (24) aus dem Sandwichbauelement (2) und dem Abdeckelement (30), und
j) Aushärten des flüssigen Harzes in dem Sandwichbauelement (2), so dass die Reparaturöffnung (18) von ausgehärtetem Harz mit integrierten Fasern verschlossen wird, welche sodann einen faserverstärkten Kunststoffverschluss für die erste Kunststoffdeckschicht (4) bilden.

2. Verfahren nach dem vorhergehenden Anspruch, **dadurch gekennzeichnet, dass** das Aushärten in Schritt j) durch ein Erwärmen des flüssigen Harzes erfolgt.

3. Verfahren nach einem der vorhergehenden Ansprüche, **gekennzeichnet durch** den weiteren Schritt:
cl) Auflegen einer fluiddurchlässigen Platte (56) auf die erste Kunststoffdeckschicht (4), so dass sich die fluiddurchlässige Platte (56) vollständig über die Reparaturöffnung (18) erstreckt, wobei der Schritt c1) zwischen Schritt c) und d) ausgeführt wird.

4. Verfahren nach einem der vorhergehenden Ansprüche, **dadurch gekennzeichnet, dass** der von der Reparaturöffnung (18) abgewandte Endabschnitt (26) des Reparatur-Kerns (22) von einem Drittel oder einem Fünftel des Reparatur-Kerns (22) gebildet ist, der von der Reparaturöffnung (18) am weitesten entfernt angeordnet ist.

5. Verfahren nach einem der vorhergehenden Ansprüche, **dadurch gekennzeichnet, dass** das Abdeckelement (30) einen Dichtungs-Durchstichsabschnitt (48) aufweist, durch den die Hohlnadel (24) in Schritt e) gestochen wird.

6. Verfahren nach einem der vorhergehenden Ansprüche, **dadurch gekennzeichnet, dass** das Abdeckelement (30) als eine Abdeckplatte, insbesondere als eine Gummi-Abdeckplatte oder als eine Silikon-Abdeckplatte, ausgebildet ist.

7. Verfahren nach einem der vorhergehenden Ansprüche, **dadurch gekennzeichnet, dass** ein Dichtungselement (50) auf der von der Reparaturöffnung (18) abgewandten Seite des Abdeckelements (30) angeordnet ist, wobei das Dichtungselement (50) fluiddicht, insbesondere gasdicht, mit dem Abdeckelement (30) verbunden ist, und wobei die Hohlnadel (24) in Schritt e) durch das Dichtungselement (50) in das Abdeckelement (30) gestochen wird.

8. Verfahren nach dem vorhergehenden Anspruch, **dadurch gekennzeichnet, dass** sich eine fluiddichte Dichtung zwischen einer radial außenseitigen Wandung (46) der Hohlnadel (24) und dem Dichtungselement (50) beim Einstechen der Hohlnadel (24) in das Dichtungselement (50) ausbildet.

9. Verfahren nach einem der vorhergehenden Ansprüche 7 bis 8, **dadurch gekennzeichnet, dass** das Dichtungselement (50) derart ausgebildet ist, dass sich das Dichtungselement (50) mit dem Herausziehen der Hohlnadel (24) in Schritt i) fluiddicht verschließt.

10. Verfahren nach einem der vorhergehenden Ansprüche, **dadurch gekennzeichnet, dass** zumindest ein Teil des flüssigen Harzes während des Absaugens in Schritt g) durch eine Grenzschicht (28) zwischen dem Reparatur-Kern (22) und dem Kern des Sandwichbauelements (2) strömt.

11. Verfahren nach einem der vorhergehenden Ansprüche, **dadurch gekennzeichnet, dass** in den Kern (8) mehrere Verstärkungsstifte (10) eingebracht sind, die sich jeweils von einer Innenseite (12) der ersten Kunststoffdeckschicht (4) zu einer Innenseite (14) der zweiten Kunststoffdeckschicht (6) erstrecken und mit diesen mechanisch verbunden sind.

12. Verfahren nach einem der vorhergehenden Ansprüche, **dadurch gekennzeichnet, dass** in den Reparatur-Kern (22) mehrere Verstärkungsstifte (54) eingebracht sind, die sich nach dem Schritt b) jeweils von einer Innenseite (12) der ersten Kunststoffdeckschicht (4) und/oder von einer Grenzschicht (28) zwischen dem Reparatur-Kern (22) und dem Kern (8) zu der Reparaturöffnung (18) erstrecken.

13. Verfahren nach dem vorhergehenden Anspruch, **dadurch gekennzeichnet, dass** die in den Reparatur-Kern (22) eingebrachten Verstärkungsstifte (54) durch das Aushärten des flüssigen Harzes in Schritt j) mit der zweiten Kunststoffdeckschicht (6) und dem Kunststoffverschluss stoffschlüssig verbunden werden.

14. Verfahren nach einem der vorhergehenden Ansprüche 11 bis 13, **dadurch gekennzeichnet, dass** die Verstärkungsstifte (54) als Glasfaser-Verstärkungsstifte, als Karbonfaser-Verstärkungsstifte, als Polyester-Verstärkungstifte und/oder als Polyamidfaser-Verstärkungsstifte ausgebildet sind.

15. Verfahren nach dem vorhergehenden Anspruch 11 bis 14, **dadurch gekennzeichnet, dass** zumindest ein Teil des flüssigen Harzes während des Absaugens in Schritt g) durch eine Grenzschicht (28) zwischen dem Reparatur-Kern (22) und den darin eingebrachten Verstärkungsstiften (10) strömt.

## Claims

1. A process of repairing a sandwich structural member (2) comprising a first, fibre-reinforced plastics facing layer (4), a second plastics facing layer (6) and a core (8) disposed between the first and second plastics facing layers (4, 6) and having pores, the method comprising the steps of:
a) removing a portion (16) of the first plastic cover layer (4) to form a repair opening (18) providing access to a repair area (20) of the core (8),
b) replacing at least a portion of the core (8) from the repair region (20) with a repair core (22),
c) inserting fibres, in particular a prepreg material with the fibres, into the repair opening (18),
d) placing a cover element (30), preferably a cover plate, on the first plastic cover layer (4) so that the cover element (30) extends completely over the repair opening (18) and an annular sealing surface (32) is formed around the repair opening (18) between the cover element (30) and the first plastic cover layer (4), wherein the cover element (30) comprises a first channel (34) extending from an upper side channel opening (36) to a lower side channel opening (38) arranged opposite to the repair opening (18),
**characterised by**
e) piercing a hollow needle (24) through the cover member (30) and fibres into the repair core (22) such that a tip (42) of the hollow needle (24) extends into an end portion (26) of the repair core (22) remote from the repair opening (18),
f) establishing fluid communication between a container of liquid resin and an end (44) of the hollow needle (24) remote from the tip (42),
g) drawing fluid, in particular air, through the first channel (34) from the 30 repair region (20) so that liquid resin flows through the hollow needle (24) into the end portion (26) of the repair core (22) and flows to the fibres in the repair opening (18),
h) stopping the suction from step g) when the liquid resin has flowed to the fibres,
i) withdrawing the hollow needle (24) from the sandwich member (2) and the cover member (30), and
j) curing the liquid resin in the sandwich member (2) so that the repair opening (18) is closed by cured resin with integrated fibres, which then form a fibre-reinforced plastic closure for the first plastic cover layer (4).

2. The process according to the preceding claim, **characterized in that** the curing in step j) is carried out by heating the liquid resin.

3. The process according to any one of the preceding claims, **characterized by** the further step of:
c1) placing a fluid-permeable sheet (56) on the first plastic cover layer (4) so that the fluid-permeable sheet (56) extends completely over the repair opening (18), wherein step c1) is carried out between steps c) and d).

4. The process according to one of the preceding claims, characterized 20 in that the end portion (26) of the repair core (22) facing away from the repair opening (18) is formed by a third or a fifth of the repair core (22) located furthest from the repair opening (18).

5. The process according to any one of the preceding claims, **characterized in that** the cover member (30) comprises a seal piercing portion (48) through which the hollow needle (24) is pierced in step e).

6. Method according to one of the preceding claims, **characterized in that** the cover element (30) is formed as a cover plate, in particular as a rubber cover plate or as a silicone cover plate.

7. The process according to one of the preceding claims, **characterized in that** a sealing element (50) is arranged on the side of the cover element (30) facing away from the repair opening (18), the sealing element (50) being connected to the cover element (30) in a fluid-tight, in particular gas-tight, manner, and the hollow needle (24) being pierced into the cover element (30) through the sealing element (50) in step e).

8. The process according to the preceding claim, **characterized in that** a fluid-tight seal is formed between a radially outer wall (46) of the hollow needle (24) and the sealing element (50) when the hollow needle (24) is pierced into the sealing element (50).

9. The process according to any one of the preceding claims 7 to 8, **characterized in that** the sealing element (50) is formed such that the sealing element (50) closes in a fluid-tight manner with the withdrawal of the hollow needle (24) in step i).

10. The process according to any one of the preceding claims, **characterized in that** at least part of the liquid resin flows through an interface (28) between the repair core (22) and the core of the sandwich member (2) during the suction in step g).

11. The process according to any one of the preceding claims, **characterized in that** a plurality of reinforcing pins (10) are introduced into the core (8), each extending from and being mechanically connected to an inner side (12) of the first plastic facing layer (4) to an inner side (14) of the second plastic facing layer (6).

12. The process according to any one of the preceding claims, **characterized in that** a plurality of reinforcing pins (54) are introduced into the repair core (22), each reinforcing pin (54) extending after step b) from an inner side (12) of the first plastic cover layer (4) and/or from a boundary layer (28) between the repair core (22) and the core (8) to the repair opening (18).

13. The process according to the preceding claim, **characterized in that** the reinforcing pins (54) inserted into the repair core (22) are materially bonded to the second plastic cover layer (6) and the plastic closure by the curing of the liquid resin in step j).

14. The process according to any one of the preceding claims 11 to 13, **characterized in that** the reinforcing pins (54) are formed as glass fibre reinforcing pins, as carbon fibre reinforcing pins, as polyester reinforcing pins and/or as polyamide fibre reinforcing pins.

15. The process according to the preceding claim 11 to 14, **characterized in that** at least part of the liquid resin flows through an interface (28) between the repair core (22) and the reinforcing pins (10) inserted therein during the suction in step g).

## Revendications

1. Un procédé de réparation d'un élément sandwich (2) comprenant une première couche de parement en plastique renforcé de fibres (4), une seconde couche de parement en plastique (6) et une âme (8) disposée entre les première et seconde couches de parement en plastique (4, 6) et ayant des pores, le procédé comprenant les étapes consistant à :
(a) enlever une partie (16) de la première couche de couverture en plastique (4) pour former une ouverture de réparation (18) donnant accès à une zone de réparation (20) du noyau (8),
b) remplacer au moins une partie du noyau (8) de la région de réparation (20) par un noyau de réparation (22),
c) insérer des fibres, en particulier un matériau préimprégné avec les fibres, dans l'ouverture de réparation (18),
d) placer un élément de couverture (30), de préférence une plaque de couverture, sur la première couche de couverture en plastique (4), de sorte que l'élément de couverture (30) s'étende complètement sur l'ouverture de réparation (18) et qu'une surface d'étanchéité annulaire (32) soit formée autour de l'ouverture de réparation (18) entre l'élément de couverture (30) et la première couche de couverture en plastique (4), dans lequel l'élément de recouvrement (30) comprend un premier canal (34) s'étendant d'une ouverture de canal latérale supérieure (36) à une ouverture de canal latérale inférieure (38) disposée à l'opposé de l'ouverture de réparation (18),
**caractérisé par**
e) percer une aiguille creuse (24) à travers l'élément de couverture (30) et les fibres dans le noyau de réparation (22) de sorte qu'une pointe (42) de l'aiguille creuse (24) s'étende dans une partie d'extrémité (26) du noyau de réparation (22) éloignée de l'ouverture de réparation (18),
f) établir une communication fluidique entre un récipient de résine liquide et une extrémité (44) de l'aiguille creuse (24) éloignée de la pointe (42),
g) aspirer du fluide, en particulier de l'air, à travers le premier canal (34) à partir de la zone de réparation (20) de sorte que la résine liquide s'écoule à travers l'aiguille creuse (24) dans la partie d'extrémité (26) du noyau de réparation (22) et s'écoule vers les fibres dans l'ouverture de réparation (18),
h) arrêter l'aspiration de l'étape g) lorsque la résine liquide s'est écoulée vers les fibres,
i) retirer l'aiguille creuse (24) de l'élément sandwich (2) et de l'élément de couverture (30), et
j) durcissement de la résine liquide dans l'élément sandwich (2) de sorte que l'ouverture de réparation (18) est fermée par la résine durcie avec des fibres intégrées qui forment alors une fermeture en plastique renforcée par des fibres pour la première couche de couverture en plastique (4).

2. Procédé selon la revendication précédente, **caractérisé en ce que** le durcissement à l'étape j) est effectué par chauffage de la résine liquide.

3. Procédé selon l'une quelconque des revendications précédentes, **caractérisé par** l'étape supplémentaire de :
c1) placer une feuille perméable aux fluides (56) sur la première couche de couverture en plastique (4) de sorte que la feuille perméable aux fluides (56) s'étende complètement sur l'ouverture de réparation (18), dans lequel l'étape c1) est réalisée entre les étapes c) et d).

4. Procédé selon l'une quelconque des revendications précédentes, **caractérisé en ce que** la partie d'extrémité (26) du noyau de réparation (22) opposée à l'ouverture de réparation (18) est formée par un tiers ou un cinquième du noyau de réparation (22) situé le plus loin de l'ouverture de réparation (18).

5. Procédé selon l'une quelconque des revendications précédentes, **caractérisé en ce que** l'élément de recouvrement (30) comprend une partie de perçage de joint (48) à travers laquelle l'aiguille creuse (24) est percée à l'étape e).

6. Procédé selon l'une des revendications précédentes, **caractérisé en ce que** l'élément de recouvrement (30) est réalisé sous la forme d'une plaque de recouvrement, en particulier d'une plaque de recouvrement en caoutchouc ou d'une plaque de recouvrement en silicone.

7. Procédé selon l'une des revendications précédentes, **caractérisé en ce qu'**un élément d'étanchéité (50) est disposé sur le côté de l'élément de recouvrement (30) opposé à l'ouverture de réparation (18), l'élément d'étanchéité (50) étant relié à l'élément de recouvrement (30) de manière étanche aux fluides, en particulier étanche aux gaz, et l'aiguille creuse (24) étant percée dans l'élément de recouvrement (30) à travers l'élément d'étanchéité (50) à l'étape e).

8. Procédé selon la revendication précédente, **caractérisé en ce qu'**un joint étanche aux fluides est formé entre une paroi radialement extérieure (46) de l'aiguille creuse (24) et l'élément d'étanchéité (50) lorsque l'aiguille creuse (24) est percée dans l'élément d'étanchéité (50).

9. Procédé selon l'une quelconque des revendications précédentes 7 à 8, **caractérisé en ce que** l'élément d'étanchéité (50) est formé de telle sorte que l'élément d'étanchéité (50) se ferme de manière étanche aux fluides lors du retrait de l'aiguille creuse (24) à l'étape i).

10. Procédé selon l'une quelconque des revendications précédentes, **caractérisé en ce qu'**au moins une partie de la résine fluide s'écoule à travers une interface (28) entre le noyau de réparation (22) et le noyau de l'élément sandwich (2) pendant l'aspiration à l'étape g).

11. Procédé selon l'une quelconque des revendications précédentes, **caractérisé en ce qu'**une pluralité de broches de renforcement (10) sont introduites dans le noyau (8), chacune s'étendant depuis et étant reliée mécaniquement à un côté intérieur (12) de la première couche de revêtement en plastique (4) à un côté intérieur (14) de la deuxième couche de revêtement en plastique (6).

12. Procédé selon l'une quelconque des revendications précédentes, **caractérisé en ce que** l'on introduit dans le noyau de réparation (22) une pluralité de broches de renforcement (54), dont chacune, après l'étape b), s'étend depuis une face intérieure (12) de la première couche de recouvrement en matière plastique (4) et/ou depuis une couche limite (28) entre le noyau de réparation (22) et le noyau (8) jusqu'à l'ouverture de réparation (18).

13. Procédé selon la revendication précédente, **caractérisé en ce que** les broches de renforcement (54) insérées dans le noyau de réparation (22) sont liées matériellement à la deuxième couche de couverture en plastique (6) et à la fermeture en plastique par le durcissement de la résine liquide à l'étape j).

14. Procédé selon l'une quelconque des revendications précédentes 11 à 13, **caractérisé en ce que** les broches de renforcement (54) sont formées en tant que broches de renforcement en fibre de verre, en tant que broches de renforcement en fibre de carbone, en tant que broches de renforcement en polyester et/ou en tant que broches de renforcement en fibre de polyamide.

15. Procédé selon la revendication précédente 11 à 14, **caractérisé en ce qu'**au moins une partie de la résine liquide s'écoule à travers une interface (28) entre le noyau de réparation (22) et les broches de renforcement (10) insérées dans celui-ci pendant l'aspiration à l'étape g).
